# EUROPÄISCHE PATENTSCHRIFT

(11) **EP 2 011 702 B1**
(45) Veröffentlichungstag und Bekanntmachung des Hinweises auf die Patenterteilung: **11.02.2015**
(21) Anmeldenummer: 08010656.0
(22) Anmeldetag: 12.06.2008
(51) Int. Cl.: B60R 21/205

(54) **Abstützung für ein Airbaggehäuse eines Kraftfahrzeuges**
Support for a vehicle airbag
Support pour un coussin gonflable

(30) Priorität: 05.07.2007 DE 102007031406
(43) Veröffentlichungstag der Anmeldung: 07.01.2009
(73) Patentinhaber: Dr. Ing. h.c. F. Porsche AG, 70435 Stuttgart (DE)
(72) Erfinder: Meier, Steffen, 74392 Freudental (DE); Schaupensteiner, Walter, 71277 Rutesheim (DE)

(56) Entgegenhaltungen:
- DE-A1- 10 102 437
- DE-A1- 10 340 248
- DE-A1- 19 728 557
- DE-A1-102004 013 343
- DE-C1- 4 426 785

## Beschreibung

Die Erfindung betrifft ein Airbaggehäuse eines Kraftfahrzeuges gemäß dem Oberbegriff des Anspruchs 1.

Wie allgemein aus der Praxis bekannt ist, sind Knie-Airbags an einem Querträger der Karosserie eines Kraftfahrzeuges angeordnet. Bei einer Auslösung des Knieairbags oder im Falle einer Beaufschlagung des Querträgers mit Kraft wird die Kraft in den Tragrahmen des Kraftfahrzeuges geleitet.

In der DE 103 12 597 A1 ist ein Airbaggehäuse mit einer Abstützung für ein Knieairbaggehäuse beschrieben, wobei ein Rohr jeweils endseitig im unteren Bereich an einer A-Säule und an einer Mittelstrebe eines Strukturquerträgers festgelegt ist, wobei die Mittelstrebe an einem Mitteltunnel befestigt ist. Das Rohr ist also quer zur Fahrzeuglängsrichtung geordnet und kann durch seine Anbindung an die A-Säule und an die Mittelstrebe die Reaktionskräfte während des Aufblasens eines Airbags und die Abstützkräfte während eines Aufpralls des Kraftfahrzeuges aufnehmen und an die angebundene Karosseriestruktur weiterleiten. Da das Rohr jeweils endseitig mit der A-Säule und mit der Mlttelstrebe fest verbunden ist, wird bei einer Beaufschlagung des Rohrs mit Kraft (z.B. durch eine Auslösung des Knieairbags oder eine Knieintrusion) die Kraft durch die Verbindungselementen geleitet. In diesem Fall kann sowohl das Rohr als auch die Verbindungselemente deformiert werden, wobei ein aufwändiger Austausch des Rohrs und der Verbindungselementen nötig ist.

Da ein herkömmliches Rohr endseitig mit der A-Säule und mit der Mittelstrebe fest verbunden ist, muss ein mit dem Rohr verbundenes Element (z.B. ein Verkleidungsteil oder ein Airbaggehäuse), das wiederum mit einem Tragrahmen der Karosserie verbunden ist, sehr hohe Toleranzen aufweisen, weil es keine Toleranzausgleichmöglichkeiten gibt.

Der vorliegenden Erfindung liegt die Aufgabe zugrunde, ein Airbaggehäuse eines Kraftfahrzeuges, insbesondere ein Knieairbaggehäuse, mit verbesserter Abstützung bereitzustellen, welches die genannten Probleme vermeidet.

Erfindungsgemäß wird dieses Problem durch ein Airbaggehäuse mit den Merkmalen des Anspruchs 1 gelöst. Vorteilhafte Weiterbildungen ergeben sich aus den abhängigen Ansprüchen.

Das erfindungsgemäße Airbaggehäuse sieht vor, eine Airbag oder Airbaggehäuse tragende Stützstrebe durch mindestens ein elastisches Element in einem Tragrahmen eines Fahrzeuges zu lagern. Durch die Lagerung der Stützstrebe mit mindestens einem elastischen Element kann auf Verbindungselemente, z.B. Schrauben, verzichtet werden und eine Geräuschbildung wird verhindert. Bei einer Beaufschlagung der Stützstrebe mit Kraft (z.B. durch eine Auslösung des Knieairbags oder eine Knieintrusion) wird die Kraft durch die elastische Lagerung in den Tragrahmen geleitet, indem die Stützstrebe eine kraftschlüssige Verbindung mit dem Tragrahmen eingeht. Infolge einer Verformung der Stützstrebe, die durch einen Aufprall oder eine Auslösung des Knieairbags verursacht ist, muss nur die Stützstrebe und keine Verbindungselemente ausgetauscht werden, was die Montage erleichtert und die Kosten reduzieren.

Außerdem ermöglicht das elastische Element eine Toleranzunempfindliche Aufnahme bzw. Fixierung des Knieairbags oder anderer mit der Stützstrebe verbundenen Elemente,

In vorteilhafter Ausgestaltung der Erfindung ist ein äußerer mit einem elastischen Element versehener Endbereich der Stützstrebe zwischen einem an einer A-Säule montierten Montagewinkel und einem Cockpittragrahmen eingeklemmt und ein innerer mit einem elastischen Element versehener Endbereich der Stützstrebe ist in einem Abstützelement des Tragrahmens gehalten, wobei bei der Montage der innere, mit dem elastischen Element versehene Endbereich der Stützstrebe in das Abstützelement geschoben wird. Diese Ausgestaltung ermöglicht eine besonders leichte Montage der Stützstrebe. Weitere wichtige Merkmale und Vorteile der Erfindung ergeben sich aus den Unteransprüchen, aus den Zeichnungen und aus der zugehörigen Figurenbeschreibung anhand der Zeichnungen,

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: in perspektivischer Ansicht eine Abstützung für ein erfindungsgemäßes Knieairbaggehäuse eines Kraftfahrzeuges,
- Fig. 2: einen Querschnitt durch eine äußere Abstützung der Stützstrebe nach einer bevorzugten Ausführungsform der Erfindung,
- Fig. 3: einen Querschnitt durch eine innere Abstützung der Stützstrebe nach einer bevorzugten Ausführungsform der Erfindung,
- Fig. 4: einen Querschnitt durch eine Abstützung für ein Knieairbaggehäuse eines Kraftfahrzeuges nach einer bevorzugten Ausführungsform der Erfindung.

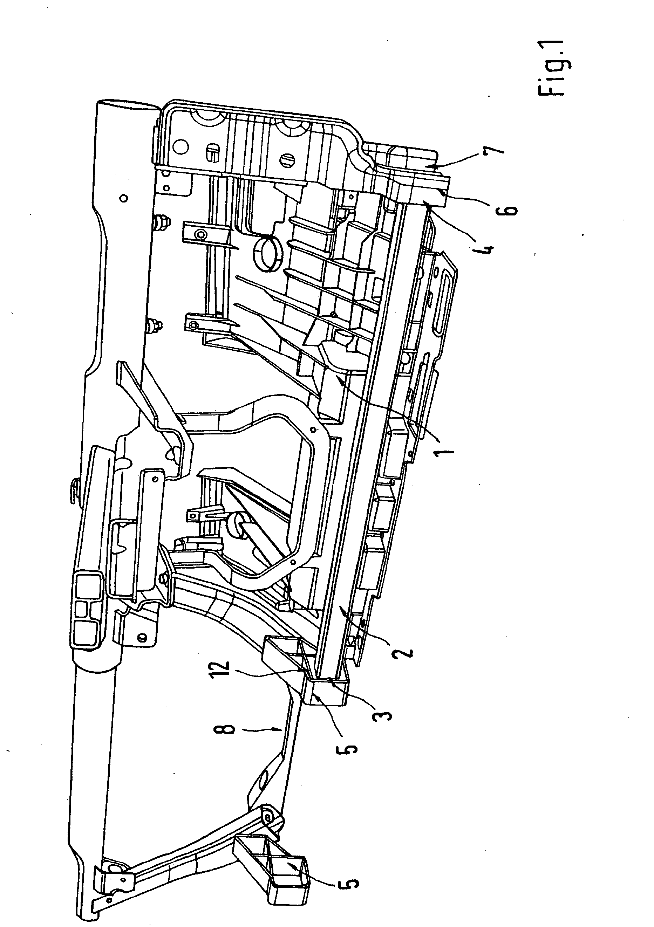

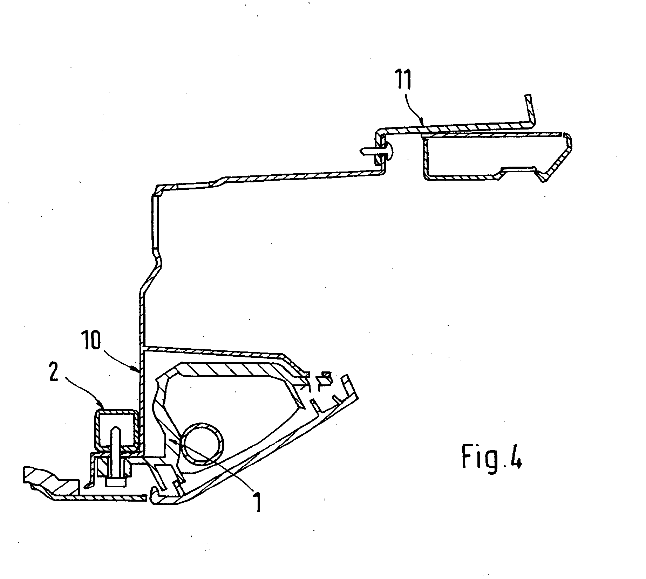

In Figur 1 ist eine Abstützung für ein Airbaggehäuse eines Kraftfahrzeuges, insbesondere für ein Knieairbaggehäuse 1, nach einer bevorzugten Ausführungsform der Erfindung dargestellt. In Fahrtrichtung gesehen, ist das Knieairbaggehäuse 1 vor einer Stützstrebe 2 angeordnet, die sich im unteren Bereich einer Schalttafel 8, 9 (vgl. z.B. Fig. 4) befindet. In Figur 1 ist die Stützstrebe 2 und das Knieairbaggehäuse 1 an der Fahrerseite eines Kraftfahrzeuges dargestellt. Es liegt auf der Hand, dass eine Stützstrebe 2 und ein Knieairbaggehäuse 1 an der Beifahrerseite des Kraftfahrzeuges ebenfalls vorgesehen werden können. An den Endbereichen 3, 4 der Stützstrebe 2 ist die Stützstrebe 2 von einem Tragrahmen abgestützt. Der Tragrahmen besteht aus mehreren mit der Fahrzeugkarosserie feststehenden Elemente 5, 6, 7, 8, 9.

In einem inneren Bereich 3 des Fahrzeugs nimmt das Abstützelement 5 ein erstes Ende der Stützstrebe 2 auf. Das Abstützelement 5 ist wiederum durch eine Mittelstrebe 8 und ein Tragrahmenelement 9 mit einem Mitteltunnel (nicht gezeigt) des Fahrzeugs verbunden. In einem äußeren Bereich des Fahrzeugs, sowohl an der Fahrerseite als auch an der Beifahrerseite, nehmen die Tragelemente 6, 7 ein zweites Ende der Stützstrebe 2 auf.

In Figur 4 ist ein Querschnitt durch eine Abstützung für ein Knieairbaggehäuse nach einer bevorzugten Ausführungsform der Erfindung dargestellt. Eine untere Schalttafel 10 ist fugenbestimmend mit einem Schalttafeloberteil 11 verbunden, vorzugsweise verschraubt, zudem ist die untere Schalttafel 10 mit der Stützstrebe 2 verbunden, ebenfalls vorzugsweise verschraubt.

Das Knieairbaggehäuse 1 ist mit der Stützstrebe 2 verbunden, vorzugsweise verschraubt. Wie aus der Figur 4 ersichtlich ist, kann das Knieairbaggehäuse 1 mit der unteren Schalttafel 8 und der Stützstrebe 2 zusammengeschraubt sein.

Bei einer Auslösung des Knieairbags oder einer Knieintrusion wird die Kraft folglich in die Stützstrebe 2 und in die Tragrahmenelemente 5, 6, 7 geleitet.

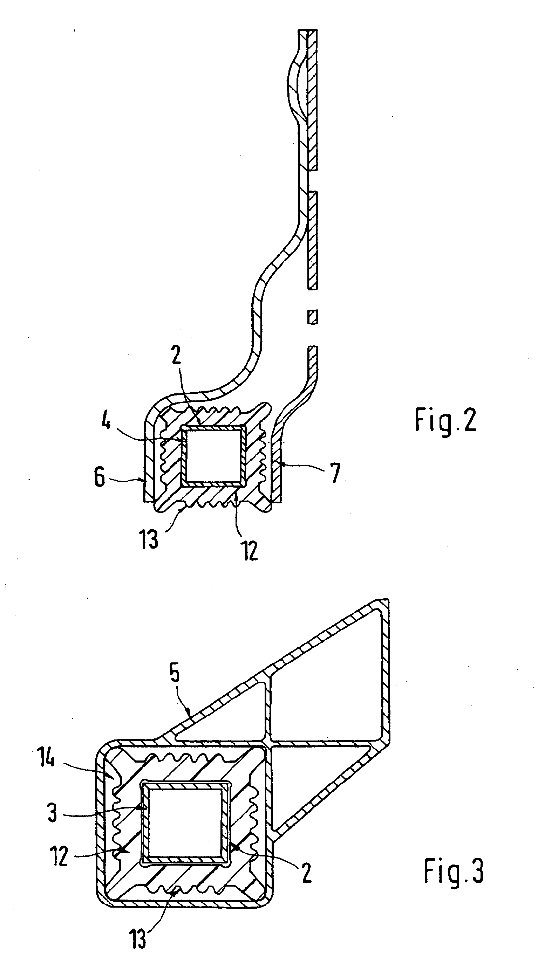

In Figur 2 ist ein Querschnitt durch die äußere Abstützung der Stützstrebe 2, dargestellt nach einer bevorzugten Ausführungsform der Erfindung. Die Stützstrebe 2 ist ein Profilrohr, das vorzugsweise rechteckig ausgebildet ist. Ein Endbereich 4 der Stützstrebe 2 ist mit einem elastischen Element 12 versehen. Vorzugsweise besteht das elastische Element 12 aus einem Kunststoff, insbesondere aus einem gummielastischen Kunststoff, oder aus Gummi. In vorteilhafter Weise ist das elastische Element 12 auf die Stützstrebe 2 aufgeklebt. Das elastische Element 12 liegt zwischen den Tragelementen 6, 7 und der Stützstrebe 2 und kann vorzugsweise die Stützstrebe 2 in Umfangsrichtung umgeben oder umschließen. Wie aus der Figur 2 ersichtlich ist, kann das Außenprofil 13 des elastischen Elements 12 eine wellige Form aufweisen. Das Tragelement 6 kann ein mit einer A-Säule verbundener und vormontierter Montagewinkel sein und das Tragelement 7 kann ein Cockpittragrahmen sein. Der mit dem elastischen Element versehene Endbereich 4 der Stützstrebe 2 wird bei der Cockpitmontage zwischen dem Montagewinkel dem Tragelement 7 eingeklemmt und somit fixiert. Der Montagewinkel dient somit auch als Abstützelement bei einer Auslösung des Knieairbags oder einer Knieintrusion.

Durch das elastische Element 12 ist die Stützstrebe 2 in den Tragrahmenelemente 6, 7 schwimmend gelagert. Da die Stützstrebe 2 nicht verschraubt oder verschweißt, sondern lose mit den Tragrahmenelementen 6, 7 elastisch verbunden ist, werden auftretende Toleranzen nicht negativ beeinflusst und Fugenmaße können eingehalten werden. Durch die Lagerung der Stützstrebe 2 mit dem elastischen Element 12 in den Tragrahmenelementen 6, 7 ist der geforderte Toleranzausgleich gewährleistet und es wird außerdem eine Geräuschbildung verhindert. Nur im Auslösefall des Knieairbags oder bei einer Knieintrusion nimmt der Montagewinkel die Reaktionskräfte auf und wirkt abstützend, indem die elastische Lagerung auf Block geht und die Stützstrebe eine kraftschlüssige Verbindung mit dem Montagewinkel eingeht und die Kraft in den Tragrahmen einleitet. Das elastische Element 12, vorzugsweise aus Gummi, ist entsprechend dem auftretenden Kraftverhältnis ausgelegt.

In Figur 3 ist ein Querschnitt durch die innere Abstützung der Stützstrebe 2 nach einer bevorzugten Ausführungsform der Erfindung dargestellt. Der innere Bereich 3 der Stützstrebe 2 ist ebenfalls mit einem solchen elastischen Element 12 versehen, vorzugsweise verklebt. Das Abstützelement 5 kann, wie bereits erwähnt, mit einem Mitteltunnel (nicht gezeigt) des Fahrzeugs verbunden sein. Das Abstützelement 5 weist eine Öffnung 14 zur Aufnahme des mit dem elastischen Element 12 versehen ersten Endes der Stützstrebe 2 auf. Deshalb ist die Stützstrebe 2 auf ähnliche Weise im Abstützelement 5 schwimmend gelagert und nicht mit dem Abstützelement 5 verschraubt oder verschweißt. Für die Montage ist der innere, mit dem elastischen Element 12 versehene Endbereich 3 der Stützstrebe 2 in das Abstützelement (5) einschiebbar. Bei der Montage wird der innere mit dem elastischen Element versehene Endbereich 3 der Stützstrebe 2 in das Abstützelement 5 geschoben und das mit dem elastischen Element versehene zweiten Ende der Stützstrebe 2 wird bei der Cockpitmontage zwischen dem Montagewinkel und dem Tragelement 7 eingeklemmt und somit fixiert.

Durch die elastische Abstützung der Stützstrebe 2 wird sich die Stützstrebe 2 im Fall eines Crashs nur deformieren bzw. in der elastischen Abstützung verlagern bzw. sich elastisch abstützen. Da die Stützstrebe 2 nicht mit dem Tragrahmen verschweißt oder verschraubt ist, ist nur ein einfacher Austausch der Stützstrebe 2 erforderlich. Außerdem werden bei der elastischen Lagerung der Stützstrebe 2 auftretende Toleranzen nicht negative beeinflusst und Fugenmaße können eingehalten werden. Darüberhinaus wird eine Geräuschbildung durch die elastischen Elementen 12 verhindert.

Die vorhergehende Beschreibung der Ausführungsbeispiele gemäß der vorliegenden Erfindung dient nur zu illustrativen Zwecken und nicht zum Zwecke der Beschränkung der Erfindung. Insbesondere im Hinblick auf einige bevorzugte Ausführungsbeispiele entnimmt ihr der Fachmann, dass verschiedene Änderungen und Modifikationen in Gestalt und Einzelheiten gemacht werden können, ohne von dem Gedanken und Umfang der Erfindung abzuweichen. Dementsprechend soll die Offenbarung der vorliegenden Erfindung nicht einschränkend sein. Stattdessen soll die Offenbarung der vorliegenden Erfindung den Umfang der Erfindung veranschaulichen, der in den nachfolgenden Ansprüchen dargelegt ist.

## Patentansprüche

1. Airbaggehäuse eines Kraftfahrzeuges, insbesondere Knieairbaggehäuse (1), mit einer Abstützung für das Airbaggehäuse, wobei die Abstützung für das Airbaggehäuse eine Stützstrebe (2) aufweist, die mit dem Airbaggehäuse (1) verbunden ist, **dadurch gekennzeichnet, dass** die Abstützung für das Airbaggehäuse mindestens ein elastisches Element (12) aufweist, über welches die Stützstrebe (2) an einem Tragrahmen (5, 6, 7) des Kraftfahrzeuges lagerbar ist, wobei die Stützstrebe (2) als ein Profilrohr ausgebildet ist, wobei das elastische Element (12) zwischen dem Profilrohr und dem Tragrahmen (5, 6, 7) derart anordenbar ist, dass das Profilrohr (5, 6, 7) im Tragrahmen schwimmend gelagert ist.

2. Airbaggehäuse nach Anspruch 1, **dadurch gekennzeichnet, dass** das mindestens eine elastische Element (12) aus einem Kunststoff, insbesondere aus einem gummielastischen Kunststoff, oder aus Gummi besteht.

3. Airbaggehäuse nach einem der vorhergehenden Ansprüche, **dadurch gekennzeichnet, dass** je ein solches elastisches Element jeweils in den Endbereichen (3, 4) der Stützstrebe (2) vorgesehen ist.

4. Airbaggehäuse nach einem der vorhergehenden Ansprüche, **dadurch gekennzeichnet, dass** ein äußerer, mit dem elastischen Element (12) versehener Endbereich (4) der Stützstrebe (2) zwischen einem an einer A-Säule montierten Montagewinkel (6) und einem Cockpittragrahmen (7) einklemmbar ist.

5. Airbaggehäuse nach Anspruch 4, **dadurch gekennzeichnet, dass** bei Auslösung des Airbags der Montagewinkel (6) als Abstützelement dient.

6. Airbaggehäuse nach einem der vorhergehenden Ansprüche, **dadurch gekennzeichnet, dass** ein Innerer, mit dem elastischen Element (12) versehener Endbereich (3) der Stützstrebe (2) in einem Abstützelement (5) des Tragrahmens (5, 6, 7) haltbar ist, wobei der innere, mit dem elastischen Element (12) versehene Endbereich (3) der Stützstrebe (2) für die Montage in das Abstützelement (5) einschiebbar ist,

7. Airbaggehäuse nach einem der vorhergehenden Ansprüche, **dadurch gekennzeichnet, dass** das mindestens eine elastische Element (12) auf die Stützstrebe (5) aufgeklebt ist.

8. Airbaggehäuse nach einem der vorhergehenden Ansprüche, **dadurch gekennzeichnet, dass** das Airbaggehäuse (1) in Fahrtrichtung gesehen vor der Stützstrebe (2) angeordnet und mit der Stützstrebe (2) verschraubt ist.

9. Airbaggehäuse nach einem der Ansprüche 1 bis 7, **dadurch gekennzeichnet, dass** das elastisches Element (12) die Stützstrebe (2) in Umfangsrichtung umgibt und ein welliges Außenprofil (13) aufweist.

## Claims

1. Airbag housing of a motor vehicle, in particular knee airbag housing (1), having a support for the airbag housing, wherein the support for the airbag housing has a support strut (2) which is connected to the airbag housing (1), **characterized in that** the support for the airbag housing has at least one elastic element (12) by means of which the support strut (2) can be mounted on a carrying frame (5, 6, 7) of the motor vehicle wherein the support strut (2) is configured as a profiled tube, it being possible for the elastic element (12) to be arranged between the profiled tube and the carrying frame (5, 6, 7) in such a way that the profiled tube (5, 6, 7) is mounted in the carrying frame in a floating manner.

2. Airbag housing according to claim 1, **characterized in that** the at least one elastic element (12) is composed of a plastic, in particular of an elastomeric plastic, or of rubber.

3. Airbag housing according to one of the preceding claims, **characterized in that** in each case one elastic element of this type is provided in each case in the end regions (3, 4) of the support strut (2).

4. Airbag housing according to one of the preceding claims, **characterized in that** an outer end region (4), which is provided with the elastic element (12), of the support strut (2) can be clamped in between a mounting elbow (6) which is mounted on an A-pillar and a cockpit carrying frame (7).

5. Airbag housing according to Claim 4, **characterized in that**, when the airbag is triggered, the mounting elbow (6) serves as support element.

6. Airbag housing according to one of the preceding claims, **characterized in that** an inner end region (3), which is provided with the elastic element (12), of the support strut (2) can be held in a support element (5) of the carrying frame (5, 6, 7), it being possible for the inner end region (3), which is provided with the elastic element (12), of the support strut (2) to be pushed into the support element (5) for mounting.

7. Airbag housing according to one of the preceding claims, **characterized in that** the at least one elastic element (12) is adhesively bonded onto the support strut (5).

8. Airbag housing according to one of the preceding claims, **characterized in that**, as viewed in the driving direction, the airbag housing (1) is arranged in front of the support strut (2) and is screwed to the support strut (2).

9. Airbag housing according to one of Claims 1 to 7, **characterized in that** the elastic element (12) surrounds the support strut (2) in the circumferential direction and has an undulating outer profile (13).

## Revendications

1. Boîtier d'airbag d'un véhicule automobile, en particulier boîtier d'airbag pour les genoux (1), comprenant un support pour le boîtier d'airbag, le support pour le boîtier d'airbag présentant un montant de support (2) qui est connecté au boîtier d'airbag (1), **caractérisé en ce que** le support pour le boîtier d'airbag présente au moins un élément élastique (12) par le biais duquel le montant de support (2) peut être supporté sur un châssis porteur (5, 6, 7) du véhicule automobile, le montant de support (2) étant réalisé sous forme de tube profilé, l'élément élastique (12) pouvant être disposé entre le tube profilé et le châssis porteur (5, 6, 7) de telle sorte que le tube profilé (5, 6, 7) soit supporté de manière flottante dans le châssis porteur.

2. Boîtier d'airbag selon la revendication 1, **caractérisé en ce que** l'au moins un élément élastique (12) se compose de matière plastique, en particulier de matière plastique ayant l'élasticité du caoutchouc, ou de caoutchouc.

3. Boîtier d'airbag selon l'une quelconque des revendications précédentes, **caractérisé en ce qu'**un tel élément élastique est à chaque fois prévu dans les régions d'extrémité (3, 4) du montant de support (2).

4. Boîtier d'airbag selon l'une quelconque des revendications précédentes, **caractérisé en ce qu'**une région d'extrémité externe (4) du montant de support (2), pourvue de l'élément élastique (12), peut être serrée entre un coude de montage (6) monté sur une colonne A et un châssis porteur d'habitacle (7).

5. Boîtier d'airbag selon la revendication 4, **caractérisé en ce que** lors du déclenchement de l'airbag, le coude de montage (6) sert d'élément de support.

6. Boîtier d'airbag selon l'une quelconque des revendications précédentes, **caractérisé en ce qu'**une région d'extrémité interne (3) du montant de support (2), pourvue de l'élément élastique (12), peut être retenue dans un élément de support (5) du châssis porteur (5, 6, 7), la région d'extrémité interne (3) du montant de support (2), pourvue de l'élément élastique (12), pouvant être enfoncée dans l'élément de support (5) pour le montage.

7. Boîtier d'airbag selon l'une quelconque des revendications précédentes, **caractérisé en ce que** l'au moins un élément élastique (12) est collé sur le montant de support (5).

8. Boîtier d'airbag selon l'une quelconque des revendications précédentes, **caractérisé en ce que** le boîtier d'airbag (1), vu dans la direction de conduite, est disposé avant le montant de support (2) et est vissé au montant de support (2).

9. Boîtier d'airbag selon l'une quelconque des revendications 1 à 7, **caractérisé en ce que** l'élément élastique (12) entoure le montant de support (2) dans la direction périphérique et présente un profil extérieur ondulé (13).
